# FASCICULE DE BREVET EUROPEEN

(11) **EP 0 598 634 B1**
(45) Date de publication et mention de la délivrance du brevet: **15.05.1996**
(21) Numéro de dépôt: 93402551.1
(22) Date de dépôt: 15.10.1993
(51) Int. Cl.: G21C 13/036, G21C 17/01, G21C 19/02

(54) **Procédé et dispositif de réparation de la surface intérieure d'un adapteur traversant le couvercle de la cuve d'un réacteur nucléaire**
Verfahren und Vorrichtung zur Reparatur der Innenfläche eines Adapters einer Durchführung durch einen Kernreaktorbehälterdeckel
Method and device for repairing an internal surface of an adaptor crossing the cover of a nuclear reactor vessel

(30) Priorité: 13.11.1992 FR 9213693
(43) Date de publication de la demande: 25.05.1994
(73) Titulaire: FRAMATOME, F-92400 Courbevoie (FR)
(72) Inventeur: Domy, Alain, F-71290 Cuisery (FR); Hebert, Claude, F-71670 Le Breuil (FR); Brayer, Laurent, F-71380 Epervans (FR)
(74) Mandataire: Bouget, Lucien

(56) Documents cités:
- EP-A- 0 433 179
- DE-A- 2 810 487
- GB-A- 2 012 959

## Description

L'invention concerne un procédé et un dispositif de réparation de la surface intérieure d'un adaptateur de forme tubulaire traversant le couvercle de la cuve d'un réacteur nucléaire refroidi par de l'eau sous pression.

Les réacteurs nucléaires à eau sous pression comportent généralement une cuve renfermant le coeur du réacteur qui est plongé dans l'eau sous pression de refroidissement du réacteur.

La cuve du réacteur de forme générale cylindrique comporte un couvercle de forme hémisphérique qui peut être rapporté sur sa partie supérieure.

Le couvercle est percé d'ouvertures au niveau de chacune desquelles est fixée par soudure, une pièce tubulaire de traversée constituant un adaptateur assurant le passage et la commande de déplacement d'un prolongateur d'une grappe de contrôle de la réactivité du coeur ou un passage de traversée d'un moyen de mesure à l'intérieur du coeur tel qu'une colonne de thermocouple.

Sur les parties d'extrémité de chacun des adaptateurs, sont fixés les mécanismes de commande de déplacement des grappes de contrôle de la réactivité du coeur.

A l'intérieur de chacune des traversées tubulaires du couvercle de cuve, est fixée, dans une position coaxiale par rapport à la pièce tubulaire de traversée et avec un certain jeu radial, une manchette thermique qui comporte une partie élargie diamétralement venant reposer sur une portée d'appui élargie diamétralement située à la partie supérieure de l'alésage de la pièce tubulaire de traversée et qui est montée libre en rotation à l'intérieur de la traversée.

Les prolongateurs des barres de commande de la réactivité du réacteur nucléaire et les colonnes de thermocouple traversent le couvercle de cuve à l'intérieur des manchettes thermiques qui sont elles-mêmes disposées coaxialement à l'intérieur des adaptateurs des barres de commande ou plus généralement à l'intérieur des pièces tubulaires de traversée du couvercle.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire.

En particulier, il peut être nécessaire de contrôler l'état des pièces de traversée du couvercle de la cuve pour s'assurer de l'intégrité de ces pièces après un certain temps de fonctionnement du réacteur, en particulier dans la zone où ces pièces tubulaires sont soudées sur le couvercle. En fonction du résultat du contrôle, on peut réaliser une réparation des défauts décelés, par affouillement de la surface intérieure de l'adaptateur dans la zone présentant un défaut et par rechargement de la cavité réalisée par affouillement.

Dans la demande de brevet déposée par les Sociétés FRAMATOME et ELECTRICITE DE FRANCE - Service National, le 28 février 1992 sous le numéro 92-02405 (correspond à EP-A-558.371, publié le 1-9-1993), on a proposé de réaliser un contrôle de la surface intérieure de l'adaptateur par ultrasons ou par courants de Foucault, à travers une fente usinée dans la manchette thermique suivant sa direction longitudinale. On a également proposé de réaliser l'affouillement par usinage à travers la fente, lorsqu'une fissure est décelée sur la surface intérieure de l'adaptateur.

Dans une demande de brevet déposée le 6 août 1992 par la Société FRAMATOME, sous le numéro 92-09789 (correspond à EP-A-582.504, publié le 9-2-1994), on a également proposé de réaliser l'affouillement des zones présentant des défauts par usinage au jet de liquide abrasif sous pression de la surface intérieure de l'adaptateur, à travers une fente pratiquée dans la manchette thermique.

Ces procédés permettent de réaliser le contrôle et éventuellement la réparation des défauts sans démonter la manchette thermique disposée à l'intérieur de l'adaptateur.

Cependant, de tels procédés ne permettent pas de caractériser parfaitement les défauts décelés et en particulier de déterminer si ces défauts s'étendent en profondeur dans la paroi de l'adaptateur et de ce fait sont susceptibles de traverser cette paroi ou d'évoluer de manière à devenir traversants.

On peut donc être amené, en utilisant les procédés suivant l'art antérieur, à effectuer des réparations avec affouillement et rechargement, qui ne sont pas vraiment nécessaires pour la sécurité du réacteur nucléaire.

Les contrôles effectués ne permettent pas non plus de déterminer de manière très précise la localisation, l'étendue et la forme géométrique des défauts détectés.

Le but de l'invention est donc de proposer un procédé de réparation de la surface intérieure d'un adaptateur de forme tubulaire traversant le couvercle de la cuve d'un réacteur nucléaire refroidi par de l'eau sous pression et fixé sur le couvercle par une soudure, qui permette d'effectuer la réparation de l'adaptateur dans l'ensemble des zones de la paroi intérieure de l'adaptateur présentant des défauts susceptibles de diminuer la sûreté du réacteur nucléaire et uniquement dans ces zones.

Dans ce but :
- on réalise une détection et un contrôle de fissures sur la surface interne de l'adaptateur, au moins dans une zone voisine de la soudure, par des opérations de contrôle à distance comportant au moins un contrôle par ressuage avec examen endoscopique à distance des fissures révélées par le ressuage,
- on réalise par usinage au moins un affouillement sur une profondeur déterminée de chacune des zones de la surface interne de l'adaptateur présentant une fissure,
- et, en fonction du résultat du contrôle par ressuage dans chacune des zones présentant une fissure, on effectue ou non un rechargement de la zone après affouillement.

L'invention est également relative à un dispositif de réparation de la surface intérieure d'un adaptateur comportant des moyens permettant de réaliser successivement la mise en évidence de défauts par ressuage, l'examen des défauts mis en évidence par endoscopie, l'affouillement des zones de la surface intérieure de l'adaptateur présentant des défauts et le rechargement de zones après affouillement.

Afin de bien faire comprendre l'invention, on va maintenant décrire, à titre d'exemple non limitatif, un procédé de réparation suivant l'invention avec contrôle par ressuage et le dispositif utilisé pour réaliser le contrôle et la réparation.

La figure 1 est une vue en coupe par un plan vertical d'une partie d'un couvercle de cuve d'un réacteur nucléaire à eau sous pression et de deux adaptateurs traversant le couvercle de cuve.

La figure 2 est une vue en coupe par un plan vertical d'une bride de fixation d'un outillage destiné à la mise en oeuvre d'un contrôle par ressuage de la surface intérieure d'un adaptateur.

La figure 2A est une vue de dessus suivant A de la figure 2.

Les figures 3A et 3B sont des vues en coupe verticale de la partie supérieure et de la partie inférieure, respectivement, d'un dispositif permettant de réaliser les opérations de préparation de la surface intérieure d'un adaptateur et de mise en oeuvre d'une opération de ressuage sur la surface intérieure de l'adaptateur.

La figure 4A est une vue en coupe par un plan vertical, suivant AO de la figure 5, d'un dispositif permettant de réaliser un examen endoscopique de la surface intérieure d'un adaptateur, pour réaliser une opération de contrôle par ressuage.

La figure 4B est une vue en coupe suivant BO de la figure 5, du dispositif d'examen endoscopique.

La figure 5 est une vue de dessus du dispositif permettant la mise en oeuvre de l'examen endoscopique.

Les figures 6A et 6B sont des vues en coupe par un plan vertical de la partie supérieure et de la partie inférieure, respectivement, d'une machine d'usinage permettant de réaliser un affouillement de la surface intérieure d'un adaptateur.

La figure 6C est une vue en coupe suivant C de la figure 6B.

La figure 6D est une vue en coupe suivant D de la figure 6B.

La figure 7 est une vue de dessus du dispositif d'usinage représenté sur la figure 6.

La figure 8 est une vue en coupe transversale d'un adaptateur, à l'issue d'une opération d'affouillement par usinage de sa surface intérieure.

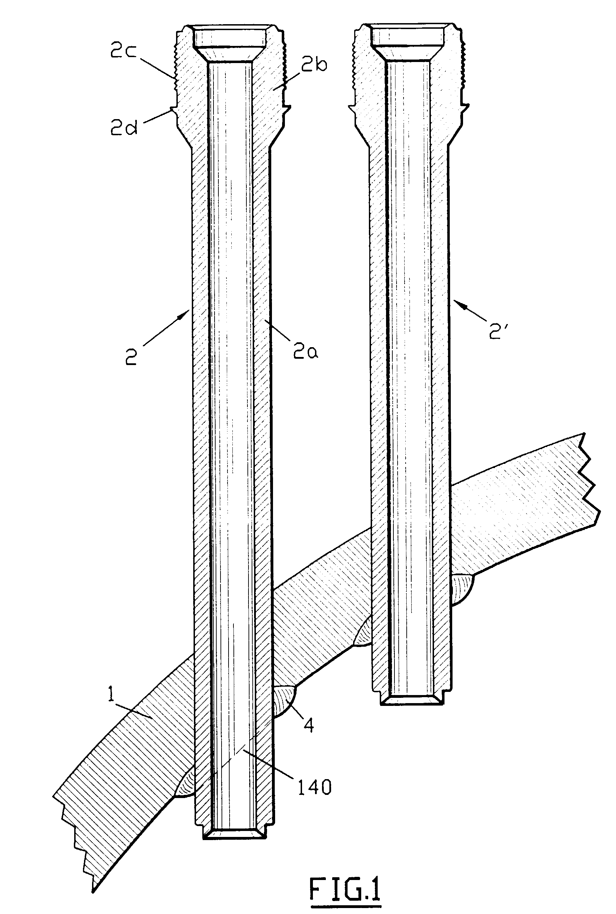

Sur la figure 1, on voit une partie du couvercle 1 d'un réacteur nucléaire à eau sous pression, de forme bombée, traversé par deux adaptateurs de forme tubulaire 2 et 2'.

L'ensemble des adaptateurs traversant le couvercle de cuve, tels que les adaptateurs 2 et 2' comportent des extrémités supérieures situées à un même niveau, au-dessus du couvercle de cuve 1.

Les parties inférieures des adaptateurs qui sont en saillie sous le couvercle de cuve se trouvent à des niveaux différents suivant leur position sur le couvercle de cuve bombé.

On va maintenant décrire plus en détail l'adaptateur 2, l'adaptateur 2' ayant la même forme générale que l'adaptateur 2 mais présentant une longueur inférieure.

L'adaptateur 2 comporte une partie tubulaire 2a de forme cylindrique traversant le couvercle de cuve et une partie supérieure 2b élargie diamétralement et comportant un filetage externe 2c destiné à assurer la fixation d'un mécanisme de déplacement d'une grappe de commande de la réactivité du coeur et une lèvre 2d destinée à compléter la fixation du mécanisme de commande qui est soudé le long de la lèvre 2d.

L'adaptateur 2 est fixé sur le couvercle de cuve, par une soudure annulaire 4 réalisée dans un chanfrein usiné autour de l'ouverture de passage de l'adaptateur, sur la surface inférieure du couvercle 1.

L'opération de soudage de l'adaptateur pour réaliser le joint de soudure 4 peut engendrer la formation sur la surface intérieure de l'adaptateur, d'amorces de fissure qui sont susceptibles d'évoluer pendant le fonctionnement du réacteur nucléaire.

Pour des questions de sûreté, il s'est avéré nécessaire d'effectuer des contrôles de la surface intérieure des adaptateurs des couvercles de cuve des réacteurs nucléaires, périodiquement, pendant les périodes d'arrêt pour entretien et rechargement du réacteur nucléaire.

Les contrôles et éventuellement les réparations sont effectués après démontage du couvercle et dépose sur un support dans la position représentée sur la figure 1 (position casque).

Préalablement aux opérations de contrôle et de réparation suivant l'invention qui seront décrites ultérieurement, les mécanismes de commande des adaptateurs et les manchettes thermiques disposées à l'intérieur de ces adaptateurs (non représentés sur la figure 1) sont démontés. Les adaptateurs sur lesquels on réalise les interventions qui seront décrites se trouvent, au moment de ces interventions dans l'état représenté sur la figure 1.

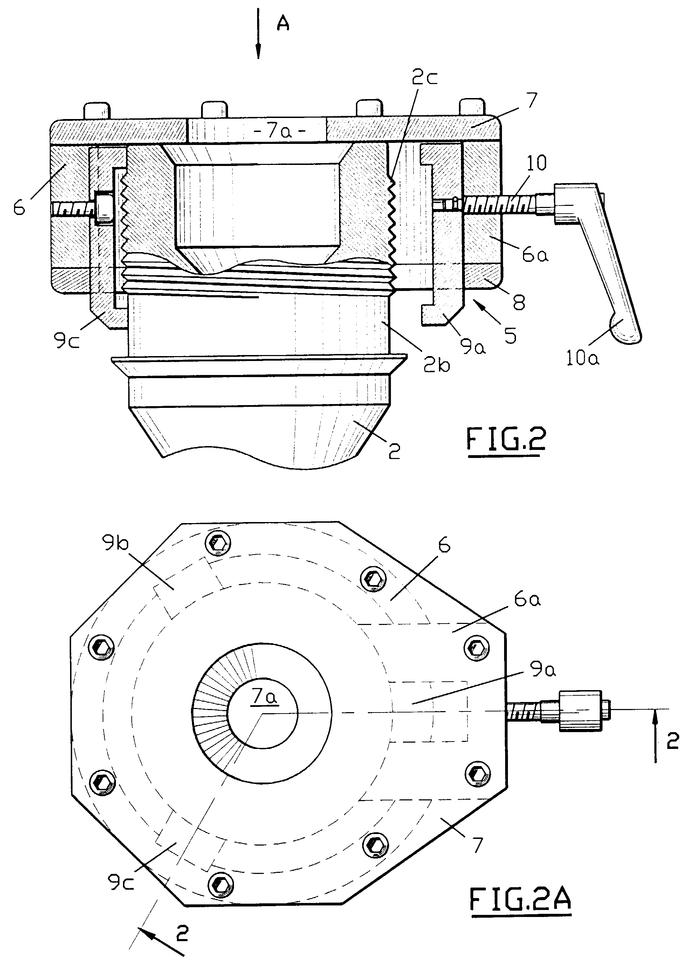

Sur les figures 2 et 2A, on a représenté la partie supérieure 2b d'un adaptateur 2 sur laquelle est engagé un ensemble de bridage permettant la mise en place d'un outillage, comme il sera décrit plus loin.

L'ensemble de bridage 5 comporte une virole 6 dont le diamètre intérieur est sensiblement supérieur au diamètre du filetage 2c de la partie supérieure 2b de l'adaptateur et deux plaques 7 et 8 fixées sur la virole 6 à sa partie supérieure et à sa partie inférieure respectivement.

La plaque supérieure 7 comporte une ouverture 7a centrée sur l'axe de l'alésage de l'adaptateur 2, par laquelle l'outillage peut être introduit à l'intérieur de l'adaptateur comme il sera expliqué plus loin.

L'ensemble de bridage 5 comporte également trois mors 9a, 9b et 9c disposés à 120° autour de l'axe de l'ouverture 7a qui est placé suivant l'axe de l'alésage de l'adaptateur lors de la pose de l'ensemble de bridage.

Les deux mors 9b et 9c sont montés et fixés par des vis, dans des embrèvements à l'intérieur de la virole 6.

Le mors 9a est monté mobile à l'intérieur d'un embrèvement ménagé dans une pièce 6a rapportée par soudage sur la virole 6 et à l'intérieur d'un embrèvement ménagé dans la plaque inférieure 8.

Une vis de manoeuvre 10 sur laquelle est fixée une poignée 10a est engagée dans un trou taraudé traversant la pièce 6a et comporte une extrémité lisse présentant une gorge engagée et montée folle dans le mors 9a.

Une goupille permet de maintenir l'extrémité de la vis 10 à l'intérieur de la pièce 9a tout en la laissant libre en rotation.

Sur la figure 2, le mors 9a a été représenté dans sa position desserrée qui permet d'engager l'ensemble de bridage 5 sur l'extrémité de l'adaptateur, les mors 9b et 9c comportant des parties d'appui venant en contact avec la partie supérieure 2b de l'adaptateur 2 sur des parties cylindriques lisses de l'adaptateur en retrait par rapport à la partie filetée 2c.

La fixation de l'ensemble de bridage 5 est assurée en faisant tourner la poignée 10a pour déplacer le mors 9a jusqu'à une position de serrage contre la surface extérieure lisse de la partie supérieure de l'adaptateur, par l'intermédiaire de la vis 10.

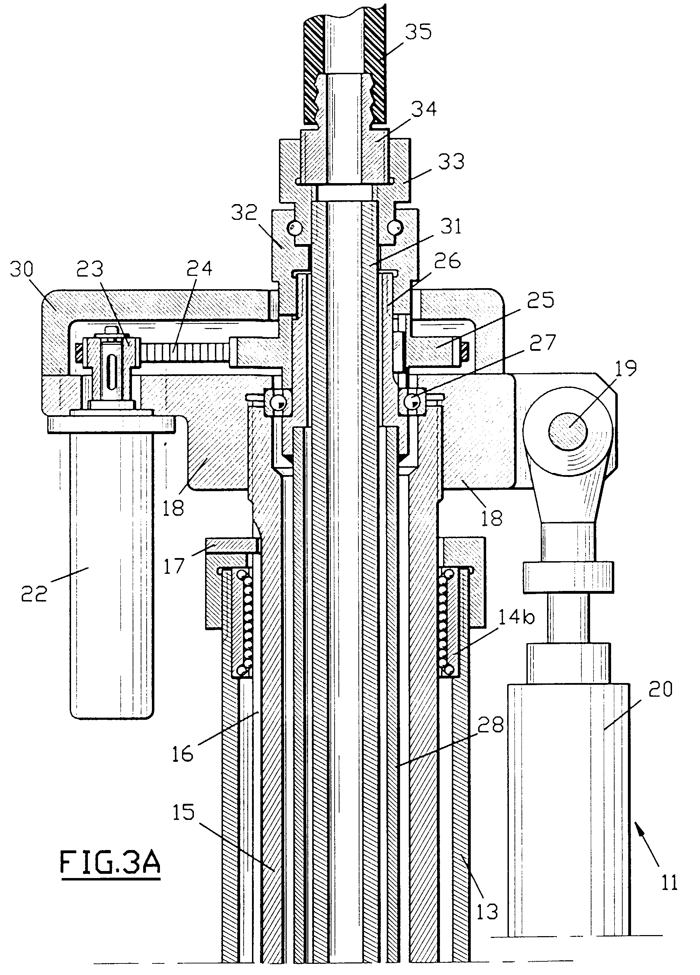

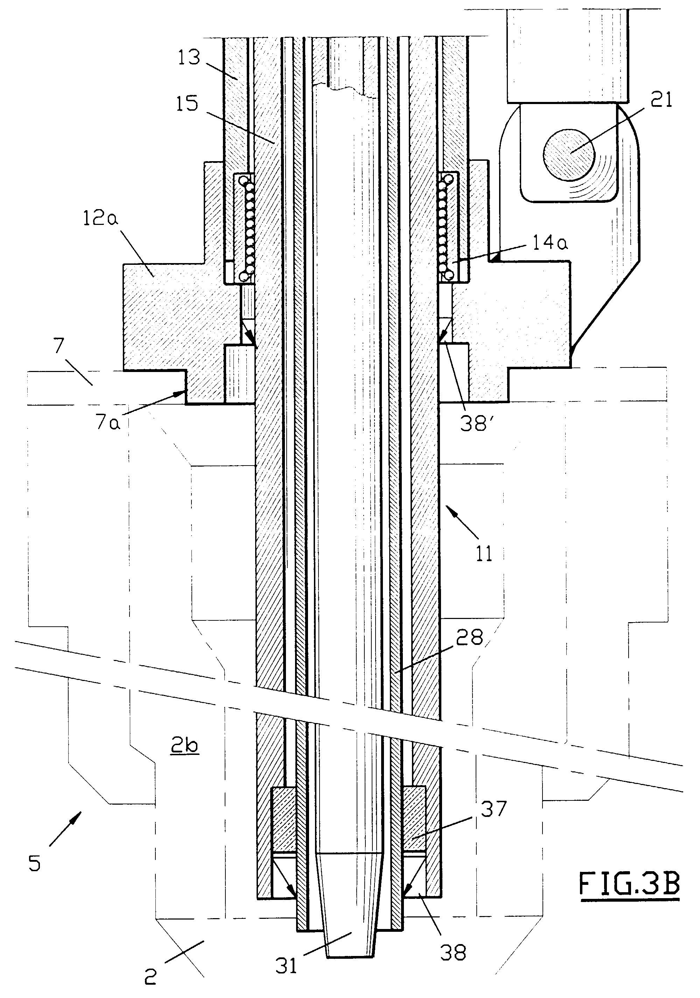

L'adaptateur équipé de l'ensemble de bridage 5 est prêt à recevoir un outillage tel que représenté sur les figures 3A et 3B et permettant de réaliser différentes opérations préalables à un contrôle de la surface intérieure de l'adaptateur par ressuage ainsi que certaines opérations du contrôle par ressuage proprement dit.

Sur les figures 3A et 3B, on a représenté un outillage désigné de manière générale par le repère 11 destiné à venir se placer sur la partie supérieure de l'adaptateur et destiné à effectuer diverses opérations de nettoyage de la surface intérieure de l'adaptateur préalablement au ressuage ainsi que diverses opérations lors de la mise en oeuvre du contrôle par ressuage.

La partie supérieure 2b de l'adaptateur a été équipée préalablement d'un ensemble de bridage 5 tel que décrit ci-dessus et représenté sur les figures 2 et 2A.

L'outillage 11 comporte un manchon inférieur 12 comportant une extrémité cylindrique dont le diamètre permet son adaptation pratiquement sans jeu à l'intérieur de l'ouverture 7a de la plaque 7 de l'ensemble de bridage 5.

La fixation de l'outillage 11 sur l'ensemble de bridage 5 et sur l'adaptateur 2 est complétée par des pinces à pose rapide (non représentées sur les figures) venant en appui d'une part sur la surface supérieure d'une collerette 12a du manchon 12 et d'autre part sur la surface latérale de l'ensemble de bridage 5.

L'outillage 11 est constitué par un ensemble de tubes coaxiaux fixés en position coaxiale à l'intérieur de l'alésage du manchon 12.

Un premier tube 13 rigidement solidaire du manchon 12 constitue la partie fixe ou fût de l'outillage à l'intérieur de laquelle la partie mobile de l'outillage est montée glissante dans la direction axiale, par l'intermédiaire de douilles à bille 14a et 14b.

La partie mobile de l'outillage montée glissante dans le fût 13 comporte une broche 15 tubulaire présentant une rainure longitudinale 16 usinée sur sa surface externe dans laquelle est engagé un doigt 17 solidaire de la partie supérieure du fût 13 et assurant le guidage dans la direction axiale de la broche 15 à l'intérieur du fût 13.

La broche 15 est solidaire à sa partie supérieure d'une platine 18 portant un axe 19 sur lequel est articulée une chape constituant l'extrémité de la tige d'un verin pneumatique 20 dont le corps est fixé à sa partie inférieure, de manière articulée sur le manchon 12, par l'intermédiaire d'un axe 21.

Le vérin permet de déplacer l'ensemble mobile de l'outillage 11 comportant la broche 15, en translation axiale, de manière à déplacer la partie active de l'outillage à l'intérieur d'un adaptateur sur lequel l'outillage 11 est placé de la manière représentée sur la figure 3B.

La platine 18 porte également un moteur d'entraînement 22 dont l'axe de sortie porte un pignon 23 engrènant avec une courroie dentée 24, elle-même engagée sur un pignon 25 solidaire en rotation d'un manchon 26 fixé à l'extrémité d'un axe tubulaire 28 disposé coaxialement et monté mobile en rotation autour de son axe, par l'intermédiaire d'un palier à bille 27, à l'intérieur de la broche 15 de l'outillage 11.

Par ce montage, l'axe 28 peut être déplacé en translation axiale avec la broche 15, à l'intérieur du fût 13 et de l'adaptateur 2 et simultanément entraîné en rotation autour de son axe par l'intermédiaire du moteur 22.

Un couvercle 30 recouvre la partie supérieure de la platine 18 et assure la protection des pignons 23 et 25 et de la courroie dentée 24.

Un organe tubulaire 31 constituant la partie active de l'outillage 11 est monté à l'intérieur de l'axe 28, dans une disposition coaxiale et fixé sur l'axe 28, de manière amovible par l'intermédiaire d'un coupleur à billes 32 dont les billes peuvent venir s'engager dans une gorge usinée dans la surface extérieure d'un manchon 33 solidaire de la partie supérieure de l'élément tubulaire 31.

Un embout 34 est fixé par l'intermédiaire du manchon 33 à l'extrémité de l'élément tubulaire 31, de manière à assurer le raccordement d'une tuyauterie souple 35 avec l'extrémité de l'élément tubulaire 31, pendant certaines phases des opérations du contrôle par ressuage.

A sa partie inférieure, l'axe 28 est monté rotatif à l'intérieur de la broche 15, par l'intermédiaire d'un palier 37.

Un joint 38 assure une étanchéité entre les pièces 15 et 28 mobiles en rotation l'une par rapport à l'autre.

Un joint d'étanchéité 38' est également intercalé entre la broche 15 mobile en translation axiale et le manchon 12 fixé sur la partie supérieure de l'adaptateur.

Comme il sera expliqué ci-dessous, dans la description du fonctionnement de l'outillage représenté sur les figures 3A et 3B, l'élément tubulaire 31 peut présenter diverses formes pour permettre de réaliser successivement les différentes opérations préalables au contrôle par ressuage proprement dit et différentes opérations du contrôle lui-même.

L'élément 31 qui est monté dans une disposition coaxiale à l'intérieur de l'axe 28 rotatif à l'intérieur de la broche 15 comporte une extrémité inférieure saillante à l'extérieur de l'axe 28 et constituant la partie active de l'outillage 11.

Cette extrémité peut porter une brosse de nettoyage de la surface intérieure de l'adaptateur, un elément d'essuyage de cette surface ou encore des buses d'aspersion en communication avec l'alésage intérieur de l'élément 31 constituant un canal d'alimentation des buses recevant du liquide par la partie supérieure de l'élément 31 relié à la tuyauterie souple 35 par l'intermédiaire de l'embout 34.

On va maintenant décrire, en se reportant en particulier aux figures 3A et 3B, la mise en oeuvre des opérations préalables au ressuage effectuées à l'intérieur d'un adaptateur 2 en utilisant l'outillage 11.

L'outillage 11 est mis en place et fixé sur un adaptateur, par l'intermédiaire du manchon 12 qui est introduit dans l'ouverture 7a de l'ensemble de bridage 5 fixé sur l'adaptateur 2.

La partie inférieure de la broche 15 située à l'extérieur du fût 13 est introduite dans l'alésage de l'adaptateur 2, de manière que l'extrémité inférieure de l'axe 28 et de l'élément tubulaire 31 se trouve dans la partie inférieure de l'adaptateur, en-dessous de la zone de soudage 4 de l'adaptateur sur le couvercle de cuve 1.

Un élément tubulaire 31 sur l'extrémité inférieure duquel est montée une brosse de nettoyage de l'alésage intérieur de l'adaptateur est fixé en position coaxiale à l'intérieur de l'axe 28, par l'intermédiaire du coupleur à billes 32.

Le moteur 22 est mis en marche, ce qui permet de mettre en rotation l'axe 28 et par son intermédiaire, l'élément tubulaire 31, à l'intérieur de l'adaptateur.

On alimente le vérin 20, de manière à réaliser un déplacement axial de la broche 15, de l'axe 28 et de l'élément tubulaire 31 d'une amplitude de l'ordre de 500 mm, de bas en haut et de haut en bas, l'axe 28 et l'élément tubulaire 31 portant la brosse étant mis en rotation.

On effectue deux aller-retour complets à l'issue desquels le moteur 22 est arrêté.

On place la broche 15 dans laquelle est fixé l'ensemble mobile de l'outillage 11 en position haute et on extrait l'élément tubulaire 31 de l'axe 28.

On déconnecte la brosse de l'extrémité de l'élément tubulaire 31 et on remplace la brosse par un goupillon sur lequel sont fixés des chiffons imbibés d'un dégraissant tel que du trichloréthylène.

On met en marche le moteur 22 et l'on effectue à nouveau plusieurs aller-retour successifs de l'ensemble mobile de l'outillage à l'intérieur de l'adaptateur.

L'opération de nettoyage est recommencée dans des conditions identiques, en changeant les chiffons du goupillon, jusqu'au moment où le chiffon ressort propre, le contrôle étant effectué visuellement.

Les opérations préalables au contrôle par ressuage sont alors terminées.

On met en place à l'intérieur de l'axe 28 un élément tubulaire 31 comportant une buse d'aspersion annulaire à son extrémité et constituant une canule qui est reliée à son extrémité supérieure à un tuyau souple d'alimentation en liquide.

On effectue au moins un aller-retour en translation à l'intérieur de l'adaptateur en alimentant la canule en un pénétrant liquide utilisé habituellement pour les contrôles non destructifs par ressuage, dans le domaine de la métallurgie.

Le pénétrant est appliqué à une pression inférieure à 2 bars en effectuant au moins deux aller-retour de l'ensemble mobile en translation, avec arrêt en position basse.

On déconnecte la canule d'aspersion et on l'extrait de l'outillage 11.

On effectue alors le montage sur l'outillage 11, d'un goupillon équipé de chiffons identique au goupillon ayant servi au nettoyage préalable à la mise en place du pénétrant. On effectue plusieurs aller et retour du goupillon à l'intérieur de l'adaptateur pour essuyer le pénétrant en excès qui n'a pas été absorbé par les défauts éventuels de la surface de l'adaptateur.

On met alors en place une canule identique à la canule ayant servi à la mise en place du pénétrant sur l'outillage 11. On alimente la canule en eau pure par l'intermédiaire du tuyau souple 35 relié à son extrémité supérieure.

On réalise un lavage à l'eau de la surface intérieure de l'adaptateur à une pression inférieure à deux bars en effectuant au maximum deux aller et retour à l'intérieur de l'adaptateur. On arrête la machine en position basse.

On déconnecte la canule d'aspersion et on l'extrait de l'outillage 11.

On utilise alors le goupillon porte-chiffons pour réaliser le nettoyage de la surface intérieure de l'adaptateur.

Le nettoyage est considéré comme terminé quand le chiffon ressort propre.

On réalise alors l'application du révélateur dans la zone de l'adaptateur soumis au ressuage.

La machine est placée en position basse et l'on met en place une canule munie d'une buse d'aspersion sur l'outillage 11.

On réalise l'alimentation de la canule en un liquide révélateur tel qu'utilisé pour des opérations de contrôle non destructifs par le ressuage en métallurgie.

On réalise un dépôt du révélateur sur la surface intérieure de l'adaptateur à une pression inférieure à deux bars, en effectuant un seul aller et retour de l'ensemble mobile de l'outillage 11 à l'intérieur de l'adaptateur. On arrête la machine en position basse.

On effectue le démontage de l'outillage 11, en desserrant les pinces de fixation à serrage rapide et en séparant le manchon 12 de l'ensemble de bridage 5 qui reste en place sur l'adaptateur.

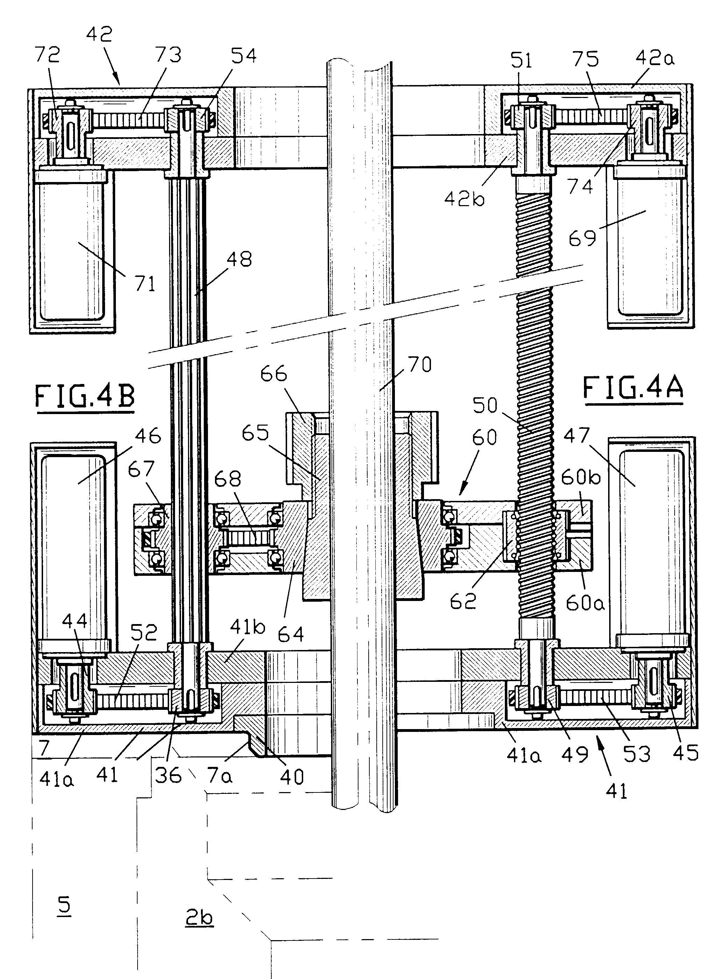

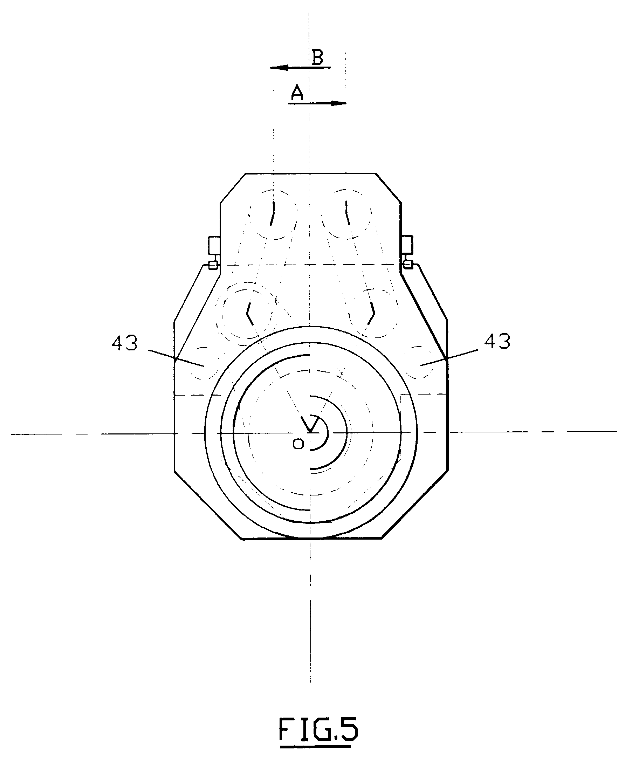

On effectue alors l'interprétation du ressuage, par examen endoscopique en utilisant le dispositif qui sera décrit ci-dessous en se référant aux figures 4A, 4B et 5.

Le dispositif a été représenté en position de service sur la partie supérieure 2b d'un adaptateur 2 équipé d'un ensemble de bridage 5 tel que décrit et représenté à la figure 2.

Le dispositif permettant l'examen endoscopique comporte une pièce de centrage 40 solidaire d'une plaque support de moteur 41 en deux parties 41a et 41b qui constitue la partie inférieure du dispositif.

Dans la position de service du dispositif sur la partie supérieure 2b d'un adaptateur, la pièce de centrage 40 est engagée dans l'alésage 7a de la plaque 7 du dispositif de bridage 5 et la plaque support de moteur 41 repose sur la plaque 7 de l'ensemble de bridage.

Le dispositif comporte également une plaque supérieure 42 en deux parties 42a et 42b constituant une plaque support de codeur.

Les deux plaques sont dans des dispositions parallèles et sont assemblées par des colonnes verticales 43 visibles sur la figure 5.

A l'intérieur de la plaque support de moteur 41, entre ses éléments 41a et 41b, sont montés rotatifs deux pignons 44 et 45 solidaires respectivement de l'axe de sortie de motoréducteurs 46 et 47.

A l'intérieur de la plaque 41 est également monté rotatif un pignon 49 solidaire de l'extrémité d'une vis 50 dont la seconde extrémité est montée rotative dans la plaque support de codeur 42 et porte un pignon 51.

Une courroie dentée 53 engrène d'une part avec le pignon 45 et d'autre part avec le pignon 49 et permet de réaliser l'entraînement en rotation de la vis 50, par le moteur 47.

Le support de moteur 41 renferme également un pignon 36 monté rotatif et solidaire de l'extremité d'un arbre cannelé 48 dont la seconde extrémité qui porte un pignon 54 est montée rotative dans la plaque support de codeur 42.

Une courroie 52 permet de réaliser l'entraînement en rotation du pignon 36 et de l'arbre cannelé 48, par le moteur 46.

Un chariot 60 en deux parties 60a et 60b est entraîné en translation dans la direction axiale par la vis 50, par l'intermédiaire d'un écrou à billes 62 en prise avec la vis 50 et monté fixe à l'intérieur du chariot 60.

A l'intérieur du chariot 60, est monté rotatif un pignon d'entraînement 64 à l'intérieur duquel est fixée une pince de serrage 65 dont le serrage et le desserrage sont assurés par un écrou 66 à serrage manuel.

La pince 65 permet d'assurer la liaison entre un support d'endoscope 70 et le chariot 60.

Le chariot 60 entraîné en translation axiale permet de déplacer le support d'endoscope suivant la direction axiale de l'adaptateur, lorsque le dispositif est dans sa position de service représentée sur les figures.

On réalise ainsi le balayage de la surface intérieure de l'adaptateur, dans la zone soumise au contrôle par ressuage.

En outre, un pignon 67 monté rotatif dans le support 60 comporte un alésage intérieur cannelé permettant son engagement sur l'arbre cannelé 48.

De cette manière, le pignon 67 est solidaire en rotation de l'arbre cannelé et mobile en translation suivant la direction axiale de l'arbre cannelé, pendant les déplacements du chariot 60.

Une courroie 68 permet d'assurer l'entraînement en rotation du pignon 64, de la pince 65 et du support d'endoscope 70, par l'intermédiaire du pignon 67, lorsque le moteur 46 est actionné pour réaliser l'entraînement en rotation de l'arbre cannelé 48.

On réalise ainsi le balayage de la surface intérieure de l'adaptateur, dans la zone soumise au ressuage par pas successifs, en translation suivant une génératrice et en rotation, c'est-à-dire suivant des zones cylindriques successives.

A l'intérieur du support d'endoscope 70 de forme tubulaire, est disposée suivant la direction axiale, une fibre optique, légèrement en saillie par rapport au support d'endoscope à son extrémité engagée dans l'adaptateur et qui est reliée à son autre extrémité, par une jonction tournante, à un moyen d'alimentation en rayonnements lumineux et de récupération des signaux lumineux transmis par la fibre de l'endoscope.

Afin de connaître à tout instant, de manière très précise, la position de l'endoscope à l'intérieur de l'adaptateur, on utilise deux codeurs 69 et 71 qui sont montés sur la plaque support de codeur 42 et qui comportent un axe rotatif sur lequel est fixé un pignon, respectivement 72 et 74.

Le pignon 72 solidaire de l'arbre du codeur 71 est entraîné en rotation par une courroie crantée 73 engrènant avec le pignon 54 solidaire de l'extrémité de l'arbre cannelé 48.

Le codeur 71 permet ainsi de connaître à tout moment l'orientation de la fibre de l'endoscope autour de l'axe de l'adaptateur.

Le pignon 74 solidaire de l'axe du codeur 69 est entraîné en rotation par une courroie crantée 75 engrènant avec le pignon 51 solidaire de l'extrémité de la vis 50.

Le codeur 69 permet ainsi de connaître à tout moment et avec une grande précision la position de l'extrémité de la fibre de l'endoscope suivant la direction axiale de l'adaptateur 2.

Le connecteur tournant de l'endoscope est relié à un poste de contrôle où les informations transmises par la fibre et par les codeurs 69 et 71 sont traitées et enregistrées, de manière à permettre une détection des fissures éventuelles révélées par le ressuage ainsi qu'une localisation et une détermination dimensionnelle très précises de ces fissures.

On dispose donc, grâce au dispositif d'examen endoscopique, d'informations extrêmement précises sur la présence de fissures sur la surface intérieure de l'adaptateur, ce qui permet d'obtenir une localisation des fissures qu'on désigne par le terme "cartographie".

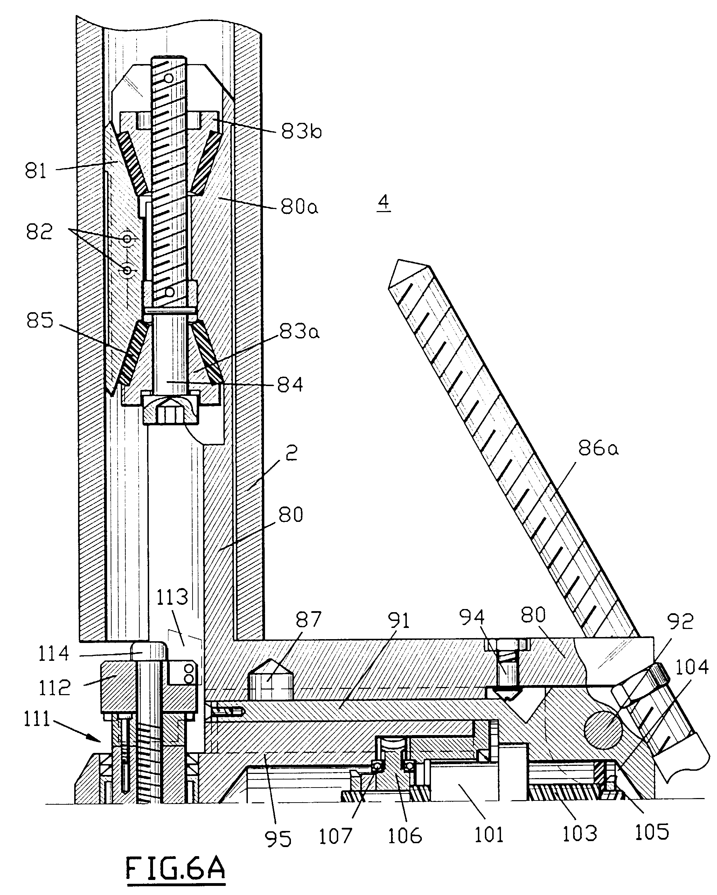

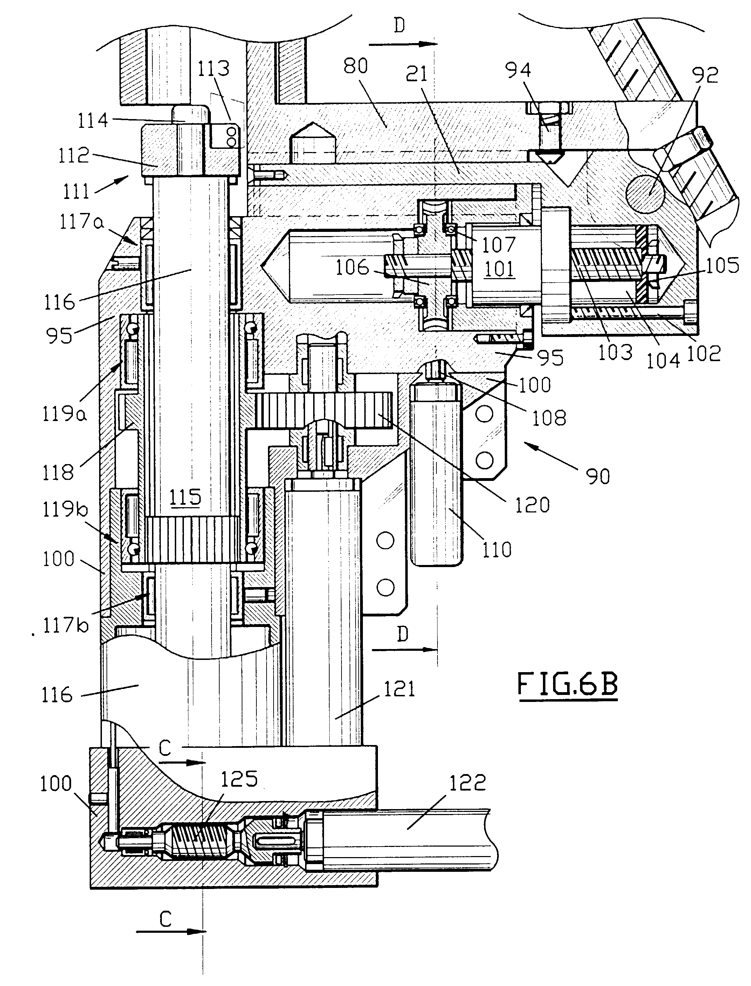

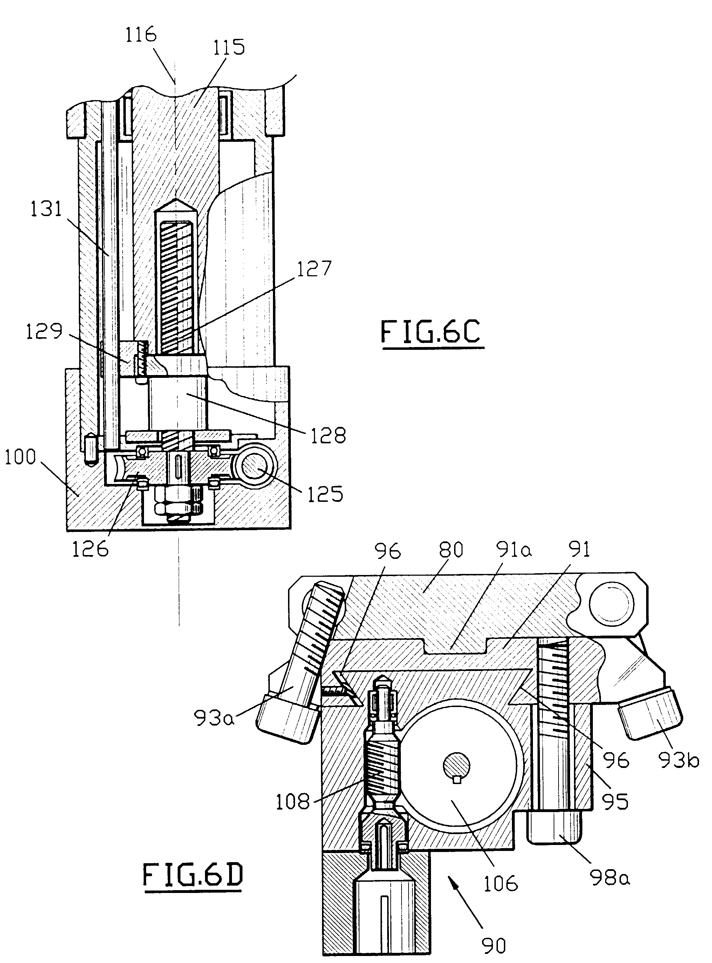

Dans le cas où une ou plusieurs fissures sont décelées, on réalise un affouillement de la surface intérieure de l'adaptateur par usinage, en utilisant un dispositif tel que représenté sur les figures 6A, 6B, 6C 6D et 7.

Le dispositif d'usinage représenté permet d'effectuer un affouillement sur la surface intérieure de l'adaptateur, dans la zone présentant des fissures qui ont été repérées et localisées de manière précise par les opérations qui ont été décrites précédemment.

Comme il est visible sur la figure 6A, l'affouillement par usinage de la surface intérieure fissurée de l'adaptateur est réalisé par la partie inférieure de l'adaptateur 2, en-dessous du couvercle 1 sur lequel l'adaptateur 2 est fixé par le joint de soudure 4.

Le dispositif d'usinage comporte un bâti 80 dont une partie supérieure 80a en forme de portion de cylindre est introduite à l'intérieur de l'adaptateur 2.

Un patin 81 est monté sur la partie 80a du bâti, par l'intermédiaire de vis 82 engagées avec jeu à l'intérieur d'ouvertures circulaires traversant le patin 81.

Le patin 81 qui est engagé dans une saignée à l'intérieur de la partie 80a du bâti présente une certaine latitude de déplacement dans la direction radiale permettant de réaliser le serrage du patin et du bâti à l'intérieur de l'adaptateur 2 et donc la fixation du dispositif d'usinage sous la partie inférieure de l'adaptateur.

Deux cales 83a et 83b traversées axialement par des ouvertures dont l'une est taraudée sont engagées sur une vis de serrage 84 et comportent des faces inclinées opposées qui sont en appui sur des patins en élastomère 85 intercalés entre les cales 83a et 83b et des faces inclinées du patin de serrage 81.

Le dispositif d'usinage est mis en place dans la partie inférieure de l'adaptateur suivant une orientation définie en fonction de la position des fissures et fixé en position par serrage de la vis 84 permettant d'assurer un déplacement axial relatif des cales 83a et 83b dans le sens de leur rapprochement et le serrage du patin 81 contre la surface intérieure de l'adaptateur, par l'intermédiaire des patins en élastomère 85.

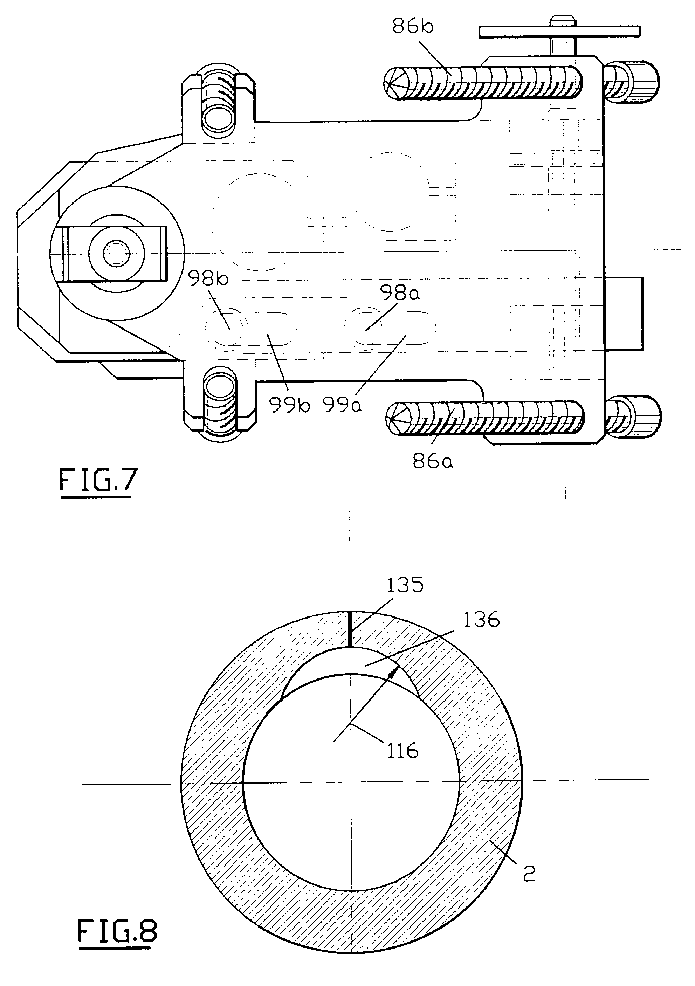

Sur le bâti 80 du dispositif d'usinage sont également montés deux pieds d'appui réglables 86a et 86b (figure 7) qui sont mis en appui sur la partie inférieure du couvercle au voisinage du joint de soudure 4, pour assurer une reprise de couple, pendant l'usinage de la surface intérieure de l'adaptateur.

De cette façon, le dispositif qui est serré à l'intérieur de l'adaptateur et maintenu par les pieds d'appui 86a et 86b reste stable pendant l'usinage permettant de réaliser l'affouillement de la surface intérieure de l'adaptateur.

Le montage du bâti 80 de l'outillage sur l'adaptateur 2 est réalisé en utilisant un pied support qui est introduit dans une ouverture 87 à la partie inférieure du bâti 80.

L'orientation de la partie 80a du bâti à l'intérieur de l'adaptateur 2 est réalisée en utilisant un gabarit qui vient se fixer sur la partie inférieure du bâti 80 et qui comporte des moyens de repérage dont on réalise l'alignement avec des repères qui ont été tracés sur l'adaptateur dans des positions circonférentielles correspondant à la position des fissures qui ont été repérées et localisées par endoscopie.

Lorsque le bâti 80 de l'outillage est en place à l'intérieur de l'adaptateur 2, on vient monter l'outillage désigné de manière générale par le repère 90 sur sa partie inférieure.

L'outillage 90 comporte une semelle de fixation 91 qui vient se placer dans l'alignement d'ouvertures du bâti 80, lorsque la semelle 91 est rapportée contre la surface inférieure du bâti 80. Un axe d'assemblage 92 est alors introduit dans les ouvertures alignées du bâti 80 et de la semelle 91.

La semelle 91, comme il est visible sur la figure 6D, comporte également une rainure 91a dans laquelle est introduite une saillie du bâti 80, lorsque la semelle 91 est rabattue par pivotement autour de l'axe 92 contre la partie inférieure du bâti 80.

Des vis 93a et 93b engagées dans des noix montées articulées sur le bâti 80 sont rabattues de manière à venir s'engager dans des embrèvements de la semelle 91. Par serrage des vis 93a et 93b, on réalise la fixation de la semelle et de l'ensemble de l'outillage 90 sur le bâti 80.

Comme visible sur la figure 6B, une butée 94 fixée dans une ouverture du bâti 80 vient en appui par sa partie inférieure de forme conique sur une partie inclinée de la semelle 91, de manière à permettre un réglage en position précis de l'outillage 90 sous le bâti 80.

L'outil 90 comporte un coulisseau supérieur 95 qui est monté coulissant avec une amplitude limitée sur la semelle 91, dans une direction horizontale perpendiculaire à l'axe du bâti 80 et de l'adaptateur, grâce à un assemblage à queue d'aronde 96 et à des vis 98a et 98b engagées dans des ouvertures oblongues 99a et 99b du coulisseau supérieur 95 (figure 7).

Le déplacement transversal du coulisseau supérieur 95, de la manière qui sera décrite ci-dessous, permet d'obtenir une avance de l'outil coupant d'usinage, dans une direction radiale de la paroi de l'adaptateur, de manière à régler la profondeur de passe.

Un écrou à billes 101 est fixé par des tirants 102 sur la semelle 91. Une vis 103 est engagée à l'intérieur de l'écrou à billes 101 et montée mobile en translation et en rotation à l'intérieur d'une ouverture 104 de la semelle 91, par l'intermédiaire d'un ensemble 105 fixé à l'extrémité de la vis et monté glissant dans l'ouverture 104.

L'extrémité de la vis 103 opposée à l'ensemble glissant 105 est solidaire d'un pignon 106 monté rotatif dans le coulisseau supérieur 95 par l'intermédiaire de paliers à billes 107 et engrènant avec une vis sans fin 108 solidaire de l'extrémité de l'axe d'un moteur 110 et montée rotative dans le coulisseau supérieur 95.

Le corps du moteur 110 est fixé sur un coulisseau inférieur 100 rapporté et fixé sous le coulisseau supérieur 95.

Par mise en rotation du moteur 110, on assure un déplacement du coulisseau supérieur 95 et du coulisseau inférieur 100 portant l'outil de coupe proprement dit 111, dans la direction radiale de la paroi de l'adaptateur 2, pour assurer le réglage de la profondeur de passe.

L'ensemble de coupe 111 comporte un support d'outil 112 sur lequel sont fixés par des vis trois outils coupants tels que 113 constitués par des barreaux en acier rapide.

Le support d'outil 112 est fixé par une vis 114 sur un arbre cannelé 115 monté rotatif par l'intermédiaire de paliers à rouleaux 117a et 117b à l'intérieur de logements situés dans le prolongement l'un de l'autre et prévus à l'intérieur des coulisseaux supérieur et inférieur 95 et 100.

L'axe 116 des paliers 117a et 117b constituant l'axe de rotation de l'arbre cannelé 115 et de l'outil de coupe 113 est parallèle à l'axe de l'adaptateur et décalé par rapport à cet axe, pour permettre un usinage de la paroi intérieure de l'adaptateur sur une certaine profondeur qui est réglée par déplacement transversal des coulisseaux en utilisant le moteur de réglage de profondeur de passe 110, comme précédemment décrit.

Lorsque la position du coulisseau a été réglée pour obtenir une certaine profondeur de passe, on fixe cette position par serrage des vis 98a et 98b.

L'arbre cannelé 115 est en outre engagé à l'intérieur d'un pignon d'entraînement 118 monté rotatif par l'intermédiaire de paliers à billes 119a et 119b dans les coulisseaux 95 et 100. Le pignon d'entraînement 118 est cannelé intérieurement, de manière à pouvoir réaliser l'entraînement en rotation de l'arbre cannelé 115 tout en laissant à l'arbre cannelé 115 la possibilité de se déplacer dans la direction axiale 116.

Le pignon 118 est entrainé par l'intermédiaire d'un pignon moteur 120 fixé sur l'arbre d'un moteur 121 monté dans le coulisseau inférieur 100.

On peut ainsi entraîner en rotation autour de son axe l'arbre cannelé 115 sur lequel est fixé le support d'outil 112 et les outils 113.

En outre, pour obtenir le déplacement de l'outil dans la direction de l'axe 116 qui constitue la direction d'avance de l'usinage parallèle à la direction axiale de l'adaptateur 2, un moteur 122 est fixé dans le coulisseau inférieur 100 et comporte un axe sur lequel une vis sans fin 125 est montée rotative à l'intérieur du coulisseau inférieur 100.

Comme il est visible sur la figure 6C, la vis 125 engrène avec un pignon 126 solidaire de l'extrémité d'une vis 127 et monté rotatif à l'intérieur du coulisseau inférieur 100.

Un écrou à billes 128, solidaire d'une pièce de poussée 129, est engagé sur la vis 127.

La pièce de poussée 129 est montée mobile en translation sur des colonnes 131 solidaires du coulisseau inférieur 100 et comporte une partie engagée à l'intérieur d'une gorge usinée dans l'arbre cannelé 115.

Lorsque le moteur 122 est mis en rotation, la vis sans fin 125 entraîne le pignon 126, de sorte que la vis 127 mise en rotation assure le déplacement en translation axiale dans la direction 116, de l'écrou à billes 128, de la pièce d'entraînement 129 et de l'arbre cannelé 115.

De cette manière, l'arbre cannelé 115 peut être déplacé dans la direction axiale 116 constituant la direction d'avance de l'usinage et simultanément être mis en rotation par le moteur 121 pour réaliser un affouillement de la surface intérieure de l'adaptateur 2, grâce à l'outil coupant 113, dans les zones présentant des fissures.

Comme il est visible sur la figure 8, dans le cas d'une fissure 135 traversant la paroi de l'adaptateur 2 sur une certaine longueur axiale et substantiellement sur toute son épaisseur, on réalise, après avoir repéré la fissure, un affouillement dans une zone 136, par usinage, en utilisant le dispositif représenté sur les figures 6, 6A, 6B, 6C, 6D et 7.

Avant d'effectur la mise en place du dispositif d'usinage à l'intérieur de l'adaptateur 2 par sa partie supérieure, il peut être nécessaire de réaliser une coupe de l'extrémité inférieure de l'adaptateur saillante en-dessous du couvercle. Une telle coupe 140 est montrée sur la figure 1 (ligne en pointillés). Cette coupe de l'extrémité inférieure de l'adaptateur peut éventuellement être effectuée seulement avant le rechargement.

La zone 136 présente, à l'intérieur de la paroi de l'adaptateur 2, un contour circulaire correspondant à la trajectoire de la partie externe de l'outil 113 en rotation autour de l'axe 116 de l'outillage 90.

L'usinage est effectué en plusieurs passes. On effectue une première passe d'une profondeur de 3 mm dans la direction radiale de la paroi de l'adaptateur, puis on effectue un contrôle pour savoir si la fissure est toujours apparente sur la surface extérieure de la zone affouillée.

Dans le cas où la fissure n'est plus apparente, cette fissure ayant une profondeur de pénétration inférieure à 3 mm, à l'intérieur de la paroi de l'adaptateur 2, on considère la réparation comme effectuée, par le simple affouillement sur une profondeur de 3 mm.

Au contraire, lorsque la fissure est toujours apparente sur la surface extérieure de la zone affouillée 136, on effectue une nouvelle passe d'usinage sur une profondeur de 4 mm.

On effectue un contrôle de la surface intérieure de la zone affouillée 136. Si la fissure 135 est toujours apparente sur la surface extérieure de la zone 136, on considère cette fissure comme traversante, ce qui est le cas de la fissure 135 représentée sur la figure 8.

Dans ce cas, il est nécessaire d'effectuer un rechargement de la zone 136, pour assurer la réparation complète du défaut.

On dépose, en utilisant une machine de soudage introduite à l'intérieur de l'adaptateur, une couche de métal de soudure compatible avec le métal de l'adaptateur, à l'intérieur de l'affouillement réalisé dans la zone 136.

Comme il apparaît, le procédé suivant l'invention permet donc de réaliser des réparations par affouillement de la surface de l'adaptateur ou des réparations par affouillement et par rechargement, suivant la gravité du défaut contrôlé.

On assure donc dans tous les cas la réparation optimale des défauts, tout en évitant des interventions qui ne sont pas strictement nécessaires à l'intérieur de l'adaptateur.

En outre, le procédé de contrôle par ressuage permet non seulement de détecter les défauts de manière très sûre, mais encore de les localiser et de déterminer leur forme et dimensions, de manière très précise.

Les interventions pour réparation à l'intérieur des adaptateurs sont donc effectuées de manière optimale.

L'invention ne se limite pas aux modes de réalisation qui ont été décrits.

C'est ainsi que le procédé de détection et de localisation des défauts peut être mis en oeuvre en utilisant des méthodes de contrôle non destructif de tout type adaptées au contrôle des pièces tubulaires dans le domaine de l'énergie nucléaire, ces méthodes de contrôle étant utilisées en combinaison avec une opération de ressuage permettant d'assurer une localisation précise des défauts.

L'opération de ressuage peut être effectuée aussi bien depuis la partie inférieure du couvercle que depuis la partie supérieure, comme il a été décrit plus haut.

Les opérations de réparation comportant un affouillement de la surface intérieure de l'adaptateur peuvent permettre de réparer simultanément plusieurs défauts dans une zone de l'adaptateur, en réalisant des usinages dans des zones successives à la périphérie interne de l'adaptateur et un rechargement de la zone affouillée.

On peut imaginer l'utilisation d'outils permettant de réaliser des usinages avec une profondeur de passe déterminée en fonction des adaptateurs et du type de défaut rencontré.

De manière générale, les dispositifs de contrôle et d'usinage pourront être réalisés de manière différente des dispositifs décrits.

La réalisation des déplacements en rotation et en translation à l'intérieur de l'adaptateur des moyens de contrôle et des moyens d'usinage pourront être réalisés en utilisant des moyens moteurs différents de ceux qui ont été décrits.

## Revendications

1. Procédé de réparation de la surface intérieure d'un adaptateur (2) de forme tubulaire traversant le couvercle (1) de la cuve d'un réacteur nucléaire refroidi par de l'eau sous pression et fixé sur le couvercle (1) par une soudure (4), caractérisé par le fait :
- qu'on réalise une détection et un contrôle de fissures sur la surface interne de l'adaptateur (2), au moins dans une zone voisine de la soudure (4), par des opérations de contrôle à distance comportant au moins un contrôle par ressuage avec examen endoscopique à distance des fissures révélées par le ressuage,
- qu'on réalise par usinage au moins un affouillement sur une profondeur déterminée de chacune des zones (136) de la surface interne de l'adaptateur (2) présentant une fissure (135),
- et, qu'en fonction du résultat du contrôle par ressuage dans chacune des zones (136) présentant une fissure (135), on effectue ou non un rechargement de la zone après affouillement.

2. Procédé suivant la revendication 1, caractérisé par le fait que pour effectuer l'affouillement par usinage de la surface interne de l'adaptateur (2), on introduit à l'intérieur de l'adaptateur (2), un outillage (90) dans une position définie en fonction de la localisation des fissures par l'opération de ressuage.

3. Procédé suivant l'une quelconque des revendications 1 et 2, caractérisé par le fait qu'on réalise un premier affouillement sur une première profondeur de passe dans la direction radiale de la paroi de l'adaptateur (2),
- qu'on effectue un contrôle de la surface externe de la zone affouillée (136) dans la paroi de l'adaptateur (2),
- que, dans le cas où la fissure (135) n'est pas détectée sur la surface extérieure de la zone affouillée (136), on considère la réparation de la fissure (135) comme effectuée,
- que, dans le cas où la fissure (135) est détectée sur la surface extérieure de la zone affouillée (136), on réalise un usinage supplémentaire à une seconde profondeur de passe dans la direction radiale à l'intérieur de la paroi de l'adaptateur (2),
- qu'on effectue un nouveau contrôle de la surface extérieure de la zone affouillée (136);
- et que dans le cas où la fissure (135) est détectée sur la nouvelle surface extérieure de la zone affouillée (136), cn réalise un rechargement de la zone affouillée (136) par un métal de soudure.

4. Procédé suivant l'une quelconque des revendications 1 à 3, caractérisé par le fait qu'on réalise la détection et le contrôle de fissures (135) sur la surface interne de l'adaptateur (2), par une première extrémité (2b) de l'adaptateur (2) située au-dessus du couvercle (1) de la cuve et qu'on effectue l'affouillement par usinage à l'intérieur de l'adaptateur, par une seconde extrémité de l'adaptateur (2) située en-dessous du couvercle de la cuve de réacteur (1).

5. Procédé suivant la revendication 4, caractérisé par le fait que, préalablement à l'affouillement ou au rechargement de la surface interne de l'adaptateur (2), on réalise une coupe d'une extrémité inférieure (140) de l'adaptateur (2) saillante en-dessous du couvercle (1).

6. Procédé suivant l'une quelconque des revendications 1 à 5, caractérisé par le fait qu'avant de réaliser une détection et un contrôle de fissure (135) par ressuage sur la surface interne de l'adaptateur (2), on effectue un brossage et un nettoyage de la surface intérieure de l'adaptateur (2).

7. Dispositif de réparation de la surface intérieure d'un adaptateur (2) de forme tubulaire traversant le couvercle (1) de la cuve d'un réacteur nucléaire refroidi par de l'eau sous pression et fixé sur le couvercle (1) par une soudure (4), caractérisé par le fait qu'il comporte :
- un ensemble (11) de déplacement d'une tige (31) dans la direction axiale et en rotation autour de l'axe de l'adaptateur muni de moyens (12, 12a) pour sa fixation sur une extrémité de l'adaptateur,
- des moyens de brossage, de nettoyage et d'aspersion muni de moyens de fixation à une extrémité de la tige (31),
- un second ensemble de déplacement en translation axiale et en rotation autour de l'axe de l'adaptateur (2) d'un support d'endoscope (70), muni de moyens (40, 41) pour sa fixation sur une partie d'extrémité de l'adaptateur (2)
- et un outillage (90) comportant un bâti (80) muni de moyens (80a, 81) pour sa fixation à l'intérieur de l'adaptateur par l'une des extrémités de l'adaptateur et un ensemble d'usinage (111) comportant un outil de coupe (113) monté rotatif autour d'un axe parallèle à l'axe de l'adaptateur et mobile en translation dans la direction axiale et réglable dans au moins une direction transversale, par rapport au bâti (80).

8. Dispositif suivant la revendication 7, caractérisé par le fait que l'ensemble de déplacements de la tige (31) dans la direction axiale de l'adaptateur et en rotation autour de l'axe de l'adaptateur comporte :
- un fût (13) solidaire des moyens (12, 12a) de fixation de l'ensemble de déplacement (11) sur une partie d'extrémité de l'adaptateur, de forme cylindrique, et montés dans une disposition coaxiale à l'adaptateur :
- une broche (15) de forme tubulaire montée rotative autour de son axe et mobile en translation suivant son axe à l'intérieur du fût (13) solidaire de moyens (20) de déplacement en translation axiale,
- un axe tubulaire (28) monté rotatif autour de son axe à l'intérieur de la broche (15),
- des moyens (22, 23, 24, 25) d'entraînement en rotation de l'arbre (28) autour de son axe et des moyens de liaison amovibles (32) entre l'arbre (28) et la tige (31) montée à l'intérieur de l'arbre (28) dans une disposition coaxiale.

9. Dispositif suivant l'une quelconque des revendications 7 et 8, caractérisé par le fait que le dispositif d'entraînement en rotation et en translation axiale du support d'endoscope (70) comporte une plaque (41) munie de moyens (40) pour sa fixation sur une extrémité de l'adaptateur, une seconde plaque (42) parallèle à la plaque (41), au moins deux colonnes parallèles (43) de liaison entre les deux plaques (41, 42),
- une vis (50) montée rotative à ses extrémités dans les plaques (41) et (42) associée à des moyens d'entraînement en rotation (47, 45, 53, 49),
- un arbre cannelé (48) monté rotatif par ses extrémités dans les plaques (41, 42) et associé à des moyens d'entraînement en rotation (44, 46, 52),
- et un chariot (60) sur lequel est fixé un écrou (62) engagé sur la vis (50) et dans lequel sont montés rotatifs des moyens de fixation (64, 65) du support d'endoscope (70) et un pignon (67) comportant un alésage intérieur cannelé engagé sur l'arbre cannelé (48) et comportant des moyens (67, 68) d'entraînement en rotation d'un pignon (64) solidaire des moyens de fixation du support d'endoscope (70).

10. Dispositif suivant l'une quelconque des revendications 7 à 9, caractérisé par le fait que l'outillage d'usinage (90) comporte un coulisseau (95, 100) en deux parties monté mobile sur le bâti (80), dans une direction transversale par rapport à l'axe de l'adaptateur avec une amplitude limitée, par l'intermédiaire de moyens de guidage et de retenue (96, 98a, 99a, 98b, 99b) et comporte des moyens (101, 103, 106, 108, 110) de positionnement du coulisseau (95, 100) dans la direction transversale.

11. Dispositif suivant la revendication 10, caractérisé par le fait que le coulisseau en deux parties (95, 100) porte un arbre cannelé (115) sur lequel est fixé un support (112) d'au moins un outil (113), monté rotatif et mobile en translation axiale, des moyens moteurs (121, 120) d'entraînement en rotation d'un pignon (118) solidaire en rotation de l'arbre cannelé (115) et des moyens moteurs (122, 125, 126, 127, 128) d'entraînement en translation axiale de l'arbre cannelé (115) à l'intérieur du coulisseau (95, 100).

12. Dispositif suivant l'une quelconque des revendications 7 à 11, caractérisé par le fait qu'il comporte un ensemble de bridage (5) comprenant des moyens de fixation sur une des extrémités de l'adaptateur (2) et des moyens (7, 7a) de réception des ensembles d'entraînement en translation et en rotation de la tige (31) et du support d'endoscope (70).

## Patentansprüche

1. Verfahren zur Reparatur der Innenfläche eines Adapters (2) von rohrförmiger Gestalt, die den Deckel (1) des Behälters eines mittels Druckwasser gekühlten Kernreaktors durchquert und am Deckel (1) durch eine Schweißnaht (4) befestigt ist, dadurch gekennzeichnet ist, daß:
- eine Rißerfassung und -prüfung auf der Innenfläche des Adapters (2) durchgeführt wird, wenigstens in einer benachbarten Zone der Schweißnaht (4) durch Fernsteuerungsvorgänge, die wenigstens eine Kontrolle durch Farbeindringprüfung mit endoskopischer Fernuntersuchung der Risse aufweist, die durch die Farbeindringprüfung ermittelt wurden,
- durch Bearbeiten wenigstens eine Auswaschung über eine vorbestimmte Tiefe einer jeden der Zonen (136) der Innenfläche des Adapters (2), die einen Riß (135) aufweist, durchgeführt wird,
- und in Abhängigkeit des Ergebnisses der Farbeindringprüfung in einer jeden der Zonen (136), die einen Riß (135) aufweisen, ein Wiederaufbau der Zone nach Auswaschung durchgeführt wird oder nicht.

2. Verfahren nach Anspruch 1. dadurch gekennzeichnet, daß zur Durchführung der Auswaschung durch Bearbeiten der Innenfläche des Adapters (2) in das Innere des Adapters (2) ein Werkzeug (90) in eine Position einführt wird, die in Abhängigkeit des Ortes der Risse durch den Vorgang der Farbeindringprüfung festgelegt wird.

3. Verfahren nach Anspruch 1 oder 2, dadurch gekennzeichnet, daß eine erste Auswaschung über eine bestimmte Eindringtiefe in radialer Richtung der Seitenwand des Adapters (2) durchgeführt wird,
- daß eine Überprüfung oder Kontrolle der Außenfläche der ausgewaschenen Zone (136) in der Seitenwand des Adapters (2) durchgeführt wird,
- daß, in dem Fall, wo der Riß (135) nicht an der Außenfläche der ausgewaschenen Zone (136) erfaßt wurde, die Reparatur des Risses (135) als durchgeführt angesehen wird,
- daß, in dem Fall, wo der Riß (135) an der Außenfläche der ausgewaschenen Zone erfaßt wird, eine zusätzliche Bearbeitung bei einer zweiten Eindringtiefe in radialer Richtung im Inneren der Seitenwand des Adapters (2) durchgeführt wird,
- daß eine erneute Kontrolle der Außenfläche der ausgewaschenen Zone (136) durchgeführt wird;
- und daß, in dem Fall, wo der Riß (135) an der neuen Außenfläche der ausgewaschenen Zone (136) erfaßt wird, ein Wiederaufbau der ausgewaschenen Zone (136) durch ein Schweißmetall durchgeführt wird.

4. Verfahren nach einem der Ansprüchen 1 bis 3 dadurch gekennzeichnet, daß die Erfassung und die Kontrolle von Rissen (135) an der Innenfläche des Adapters (2) durch ein erstes Ende (2b) des Adapters (2), das oberhalb des Deckels (1) des Behälters angeordnet ist, durchgeführt wird, und daß das Auswaschen durch Bearbeiten im Inneren des Adapters durch eine zweites Ende des Adapters (2) durchgeführt wird, das unterhalb des Deckels des Reaktorbehälters (1) angeordnet ist.

5. Verfahren nach Anspruch 4, dadurch gekennzeichnet, daß vor dem Auswaschen oder dem Wiederaufbau der Innenfläche des Adapters (2) ein Schnitt eines unteren Endes (140) des Adapters (2) vorgenommen wird, der unterhalb des Deckels (1) vorspringt.

6. Verfahren nach einem der Ansprüche 1 bis 5, dadurch gekennzeichnet, daß vor der Durchführung einer Rißerfassung und -kontrolle (135) durch Farbeindringprüfung auf der Innenfläche des Adapters (2) ein Abbürsten und ein Reinigen der Innenfläche des Adapters (2) vorgenommen wird.

7. Vorrichtung zur Reparatur der Innenfläche eines Adapters (2) von rohrförmiger Gestalt, der den Deckel (1) des Behälters eines durch Druckwasser gekühlten Kernreaktors durchquert und an dem Deckel (1) durch eine Schweißnaht (4) befestigt ist, dadurch gekennzeichnet ist, daß sie aufweist:
- eine Anordnung (11) zum Verschieben einer Stange (31) in der axialen Richtung und zum Drehen um die Achse des Adapters, der mit Einrichtungen (12, 12a) für seine Befestigung an einem Ende des Adapters versehen ist,
- Abbürst-, Reinigungs- und Absaugeinrichtungen, die mit Befestigungseinrichtungen an einem Ende der Stange (31) versehen sind,
- eine zweite Anordnung zum axialen translatorischen und drehenden Bewegen um die Achse des Adapters (2) einer Endoskopstütze (70), die mit Einrichtungen (40, 41) für ihre Befestigung an einem Endabschnitt des Adapters (2) versehen ist,
- und ein Werkzeug (90), das einen Rahmen (80) aufweist, der mit Einrichtungen (80a, 81) für seine Befestigung im Inneren des Adapters durch eines der Enden des Adapters versehen ist, und mit einer Bearbeitungseinrichtung (111), die ein Schneidewerkzeug (113) aufweist, das drehbar um eine Achse parallel zur Achse des Adapters montiert ist, und in Translationsrichtung in axialer Richtung bewegbar und in wenigstens einer Querrichtung bezüglich des Rahmens (80) einstellbar ist.

8. Vorrichtung nach Anspruch 7, dadurch gekennzeichnet, daß die Anordnung der Bewegungen der Stange (31) in axialer Richtung des Adapters und zur Drehung um die Achse des Adapters aufweist:
- einen Schaft (13), der mit Einrichtungen (12, 12a) zum Befestigen der Bewegungsanordnung (11) an einem Endabschnitt des Adapters verbunden ist, wobei er von zylindrischer Form ist und in koaxialer Anordnung zu dem Adapter angebracht ist,
- einen Dorn (15) von rohrförmiger Ausbildung, der drehbar um seine Achse translatorisch beweglich entlang seiner Achse im Inneren des Schaftes (13) verbunden mit Einrichtung (20) zum axialen translatorischen Bewegen angebracht ist,
- eine rohrförmige Achse (28), die drehbar um Ihre Achse im Inneren des Dornes (15) angeordnet ist,
- Einrichtungen (22, 23, 24, 25) zum drehenden Antreiben der Welle (28) um ihre Achse und bewegbare Verbindungseinrichtungen (32) zwischen der Welle (28) und der Stange (31), die im Inneren der Welle (28) in einer koaxialen Anordnung montiert ist.

9. Vorrichtung nach einem der Ansprüche 7 oder 8, dadurch gekennzeichnet, daß die Antriebseinrichtung zum Drehen und zum axialen Bewegen des Endoskopträgers (70) eine Platte (41), die mit Einrichtungen (40) für ihre Befestigung an einem Ende des Adapters versehen ist, eine zweite Platte (42) parallel zur Platte (41), wenigstens zwei parallele Säulen (43) zum Verbinden der beiden Platten (41, 42) aufweist,
- daß eine Schraube (50) drehbar an ihren Enden in den Platten (41) und (42) angebracht ist, verbunden mit Drehantriebseinrichtungen (47, 45, 53, 49),
- daß eine gerippte Welle (48) drehbar an ihren Enden in den Platten (41, 42) montiert ist und mit Drehantriebseinrichtungen (44, 46, 52) verbunden ist,
- und daß ein Wagen (60), auf dem eine Mutter (62) im Eingriff mit der Schraube (50) befestigt ist und in dem drehbar Befestigungseinrichtungen (64, 65) des Endoskopträgers (70) und ein Ritzel (67) gelagert sind, das eine innere gerippte Ausnehmung in Eingriff mit der gerippten Welle (48) aufweist, und Einrichtungen (67, 68) zum Drehantrieb eines Ritzels (64) aufweist, das mit Befestigungseinrichtungen des Endoskopträgers (70) verbunden ist.

10. Vorrichtung nach einem der Ansprüche 7 bis 9, dadurch gekennzeichnet, daß das Bearbeitungswerkzeug (90) ein Gleitstück (95, 100) aus zwei Abschnitten, das mobil an dem Rahmen (80) angebracht ist, in einer Richtung quer bezüglich der Achse des Adapters mit einer begrenzten Amplitude, mittels Führungs- und Halteeinrichtungen (96, 98a, 99a, 98b, 99b) und Einrichtungen (101, 103, 106, 108, 110) zum Positionieren des Gleitstücks (95, 100) in der Querrichtung aufweist.

11. Vorrichtung nach Anspruch 10, dadurch gekennzeichnet, daß das Gleitstück aus zwei Abschnitten (95, 100) eine gerippte Welle oder Keilwelle (115) aufweist, auf der ein Träger (112) wenigstens eines Werkzeugs (113) befestigt ist, das drehbar und in axialer Richtung bewegbar angebracht ist, Motoreinrichtungen (121, 120) zum Drehantrieb eines Ritzels (118) vorgesehen sind, das im drehbaren Eingriff mit der rerippten Welle (115) ist und Motoreinrichtungen (122, 125, 126, 127, 128) zum Antrieb in axialer Translation der gerippten Welle (115) im Inneren des Gleitstücks (95, 100) vorgesehen sind.

12. Vorrichtung nach einem der Ansprüche 7 bis 11, dadurch gekennzeichnet, daß sie eine Flanschanordnung (5) aufweist, die Befestigungseinrichtungen an einem der Enden des Adapters (2) und Einrichtungen (7, 7a) aufweist zur Aufnahme der Antriebseinrichtungen in translatorischer und Drehrichtung der Stange (31) und der Endoskopstütze (70).

## Claims

1. Process for repairing the inner surface of a tubular adapter (2) passing through the cover (1) of the container of a pressurised water-cooled nuclear reactor and fixed to the cover (1) by a weld (4), characterised in that:
detection and checking of cracks on the inner surface of the adapter (2) is carried out, at least in a zone close to the weld (4), by remote-controlled operations comprising at least one check by dye penetration with remote endoscopic examination of the cracks revealed by the dye penetration,
at least one erosion is formed in each of the zones (136) of the inner surface of the adapter (2) having a crack (135) by machining to a predetermined depth
and, depending upon the results of the check carried out by dye penetration in each of the zones (136) having a crack (135), the zone is or is not remetalled after erosion.

2. Process according to claim 1, characterised in that, in order to carry out erosion by machining the inner surface of the adapter (2), a tool (90) is introduced into the adapter (2) in a position defined according to the location of the cracks by the dye penetration operation.

3. Process according to claim 1 or 2, characterised in that a first erosion is formed to a first pass depth in the radial direction of the wall of the adapter (2),
the outer surface of the eroded zone (136) in the wall of the adapter (2) is monitored,
if the crack (135) is undetected on the outer surface of the eroded zone (136) the crack (135) is deemed to have been repaired,
if the crack (135) is detected on the outer surface of the eroded zone (136), additional machining is carried out to a second pass depth in the radial direction with respect to the inside of the wall of the adapter (2),
a fresh check is made on the outer surface of the eroded zone (136);
and if the crack (135) is detected on the new outer surface of the eroded zone (136), the eroded zone (136) is remetalled with a weld metal.

4. Process according to any of claims 1 to 3, characterised in that the detection and checking of cracks (1135) on the inner surface of the adapter (2) is caried out through a first end (2b) of the adapter (2) located above the cover (1) of the container and the erosion is carried out by machining inside the adapter, through a second end of the adapter (2) located below the cover of the reactor container (1).

5. Process according to claim 4, characterised in that, prior to the erosion or remetalling of the inner surface of the adapter (2), a cut is made from a lower end (140) of the adapter (2) projecting below the cover (1).

6. Process according to any one of claims 1 to 5, characterised in that, before carrying out detection and checking of cracks (135) by dye penetration on the inner surface of the adapter (2), the inner surface of the adapter (2) is brushed and cleaned.

7. Apparatus for repairing the inner surface of a tubular adapter (2) passing through the cover (1) of the container of a pressurised water-cooled nuclear reactor and fixed to the cover (1) by a weld (4), characterised in that it comprises:
an assembly (11) for moving a rod (31) in the axial direction and rotating it about the axis of the adapter equipped with means (12, 12a) for fixing it to one end of the adapter,
brushing, cleaning and spraying means provided with means for attachment to one end of the rod (31),
a second assembly for axial translational movement and rotation of an endoscope support (70) about the axis of the adapter (2), equipped with means (40, 41) for fixing it to an end part of the adapter (2),
and tools (90) comprising a frame (80) equipped with means (80a, 81) for fixing it to the inside of the adapter through one end of the adapter and a machining assembly (111) comprising a cutting tool (113) rotatably mounted about an axis parallel to the axis of the adapter and movable in translation in the axial direction and adjustable in at least one transverse direction relative to the frame (80).

8. Apparatus according to claim 7, characterised in that the assembly for moving the rod (31) in the axial direction of the adapter and in rotation about the axis of the adapter comprises:
a shaft (13) integral with the means (12, 12a) for fixing the displacement assembly (11) to an end part of the adapter, cylindrical in shape, and mounted coaxially with the adapter,
a spindle (15) of tubular shape rotatably mounted about its axis and movable in translation along its axis inside the shaft (13) integral with means (20) for axial translational movement,
a tubular spindle (28) rotatably mounted about its axis inside the spindle (15),
means (22, 23, 24, 25) for rotationally driving the shaft (28) about its axis and removable connecting means (32) between the shaft (28) and the rod (31) mounted inside the shaft (28) in a coaxial arrangement.

9. Apparatus according to claim 7 or 8, characterised in that the apparatus for driving the endoscope support (70) rotationally and in axial translation comprises a plate (41) provided with means (40) for fixing it to one end of the adapter, a second plate (42) parallel to the plate (41), at least two parallel connecting columns (43) between the two plates (41, 42),
a screw (50) rotatably mounted at its ends in the plates (41) and (42), combined with rotational drive means (47, 45, 53, 49),
a grooved shaft (48) rotatably mounted by its ends in the plates (41, 42) and combined with rotational drive means (44, 46, 52),
and a carriage (60) on which is fixed a nut (62) engaging on the screw (50); and in which means (64, 65) are rotatably mounted for fixing the endoscope support (70); and a pinion (67), comprising a grooved inner bore engaging with the grooved shaft (48), and means (67, 68) for rotationally driving a pinion (64) integral with the fixing means for the endoscope support (70).

10. Apparatus according to any one of claims 7 to 9, characterised in that the machining tools (90) comprise a slide (95, 100) in two parts which is mounted on the frame (80) so as to be movable, in a transverse direction relative to the axis of the adapter, with limited range, via guide and retaining means (96, 98a, 99a, 98b, 99b), and comprises means (101, 103, 106, 108, 110) for positioning the slide (95, 100) in the transverse direction.

11. Apparatus according to claim 10, characterised in that the slide in two parts (95, 100) carries a grooved shaft (115) to which is fixed a support (112) for at least one tool (113), mounted so as to be rotatable and movable in axial translation, motor means (121, 120) for rotationally driving a pinion (118) connected for rotation with the grooved shaft (115) and motor means (122, 125, 126, 127, 128) for driving the grooved shaft (115) in axial translation inside the slide (95, 100).

12. Apparatus according to any one of claims 7 to 11, characterised in that it comprises a flanging assembly (5) comprising means for attachment to one end of the adapter (2) and means (7, 7a) for receiving the assemblies for translationally and rotationally driving the rod (31) and the endoscope support (70).
